# EUROPÄISCHE PATENTSCHRIFT

(11) **EP 2 837 923 B1**
(45) Veröffentlichungstag und Bekanntmachung des Hinweises auf die Patenterteilung: **20.06.2018**
(21) Anmeldenummer: 13180506.1
(22) Anmeldetag: 15.08.2013
(51) Int. Cl.: G01M 1/04

(54) **Unwuchtmessmaschine**
Balancing machine
Machine de mesure de déséquilibre

(43) Veröffentlichungstag der Anmeldung: 18.02.2015
(73) Patentinhaber: SEICHTER GmbH, D-30519 Hannover (DE)
(72) Erfinder: Meinen, Michael, 31171 Nordstemmen (DE); Seichter, Max, 30171 Hannover (DE)
(74) Vertreter: Patentanwälte Thömen & Körner

(56) Entgegenhaltungen:
- EP-A1- 1 746 400
- EP-A2- 0 924 502

## Beschreibung

Die Erfindung betrifft eine Unwuchtmessmaschine gemäß dem Oberbegriff des Patentanspruchs 1.

In der Automobilindustrie werden von den Herstellern von Kraftfahrzeugen strenge Anforderungen an die Qualität der verwendeten Fahrzeugreifen gestellt, und es werden nur solche Fahrzeugreifen zugelassen, bei denen die nie auszuschließende Unwucht der Fahrzeugreifen einen vorgegebenen niedrigen Wert nicht überschreitet.

Die Hersteller von Fahrzeugreifen müssen daher die produzierten Fahrzeugreifen daraufhin überprüfen, ob diese den vorgegebenen niedrigen Wert einhalten oder nicht. Fahrzeugreifen mit zu großer Unwucht können nicht an die Kraftfahrzeughersteller geliefert werden.

Die Messung der Unwucht erfolgt mit bekannten Unwuchtmessmaschinen, die nach Art einer Spindel mit einem rotierenden Teil und einem nicht rotierenden Teil aufgebaut ist. Der rotierende Teil der Spindel wird durch eine hohle Welle gebildet, die durch einen Antrieb in Rotation gebracht werden kann, und den nicht rotierenden Teil der Spindel bildet eine hohle Achse. Relativ zu dieser hohlen Achse dreht sich die hohle Welle.

Der Fahrzeugreifen, dessen Unwucht gemessen werden soll, wird auf der noch nicht rotierenden Welle befestigt und dann mit Luft befüllt. Zu diesem Zweck ist zentrisch zur hohlen Achse und zur hohlen Welle eine rohrförmige Luftzuführung vorgesehen, die mit der Welle verbunden ist und sich während der Messung der Unwucht zusammen mit der Welle dreht.

An der dem Fahrzeugreifen abgewandten Ende ist an der Luftzuführung eine Drehkupplung vorgesehen, an welcher ein Luftschlauch für die Zufuhr der für das Befüllen des Fahrzeugreifens benötigten Luft angeschlossen ist. Durch die Drehkupplung ist es möglich, den Fahrzeugreifen mit Luft zu befüllen, wenn die Welle und der Fahrzeugreifen bereits rotieren. Dadurch kann die Zeitdauer eines kompletten Messvorganges gering gehalten werden. Auch während der Messung der Unwucht bleibt die Zuführung von Luft zum Fahrzeugreifen erhalten, so dass es möglich ist, den Luftdruck innerhalb des Fahrzeugreifens zu kontrollieren und konstant zu halten. In vielen Fällen sind daher zusätzlich zum Luftschlauch auch noch elektrische Leitungen an die Drehkupplung angeschlossen, die für eine elektrische Schaltung zur Regelung des Luftdruckes innerhalb des Fahrzeugreifens vorgesehen sind, um den Luftdruck während der Messung der Unwucht konstant zu halten.

Zwischen der hohlen Achse und dem Maschinenbett der Unwuchtmessmaschine befinden sich als Sensoren ausgebildete Kraftaufnehmer zur Messung der im Betrieb der Unwuchtmessmaschine auftretenden Kräfte zwischen der hohlen Achse und dem Maschinenbett. Diese Kräfte sind ein Maß für die Unwucht.

Die Ursache für die Unwucht bei einem rotierenden Fahrzeugreifen ist bekanntlich auf eine ungleiche Massenverteilung des Fahrzeugreifens zurückzuführen, d. h. die Masse des Fahrzeugreifens ist nicht rotationssymmetrisch verteilt. Das führt dazu, dass die Rotationsachse nicht mit der stabilen Hauptträgheitsachse des Fahrzeugreifens übereinstimmt und dass die Rotationsachse im Schwerpunkt gekippt ist.

Beim rotierenden Fahrzeugreifen bewirkt die Unwucht ein Biegemoment auf der Rotationsachse, wodurch an den Enden der Rotationsachse um 180° verschobene kreisförmige Schwingungen entstehen. Der Schwerpunkt des Fahrzeugreifens bleibt dabei in Ruhelage, während die Rotationsachse wegen der Schwingungen taumelt. Die dabei auftretenden Kräfte, die ein Maß für die Unwucht darstellen, wirken auf die Kraftaufnehmer ein und werden von diesen gemessen.

Um eine möglichst genaue Messung der Unwucht zu erzielen, sollten nur solche Kräfte von den Kraftaufnehmern erfasst werden, die ausschließlich durch die Unwucht des Fahrzeugreifens erzeugt werden. Es hat sich jedoch in der Praxis gezeigt, dass dieser Idealfall in der Regel nicht gewährleistet werden kann. Dies ist darauf zurückzuführen, dass wegen der Drehkupplung selbst, sowie dem an der Drehkupplung angeschlossenen Luftschlauch sowie wegen der ggfs. zusätzlich an der Drehkupplung angeschlossenen elektrischen Leitungen neben den von der Unwucht herrührenden Kraft zusätzliche Kräfte in die Kraftaufnehmer eingeleitet werden, welche die Messung der Unwucht beeinflussen und verfälschen.

Aufgrund dieser zusätzlichen Kräfte ist bei den bekannten Unwuchtmessmaschinen folgendes zu beobachten. In Abhängigkeit davon, in welchem Winkel der Fahrzeugreifen relativ zu einem Bezugspunkt zur Welle an der Welle befestigt ist, ergeben sich verschiedene Messwerte. Wenn man diese Messwerte bei unterschiedlichen Winkeln über 360° verteilt in kartesischen Koordinaten darstellt, stellt man fest, dass die Messwerte einen Kreis bilden. Jedoch ist der Mittelpunkt dieses Kreises nicht der ideale Mittelpunkt des Koordinatensystems. Vielmehr hat der Mittelpunkt des Kreises der gemessenen Messwerte eine Abweichung vom idealen Nullpunkt des Koordinatensystems. Der ideale Nullpunkt des Koordinatensystems ergibt sich, wenn die Drehkupplung nicht an der Luftzuführung angeschlossen ist, die zusammen mit der Welle frei ohne jegliche Beeinflussung durch Fremdkräfte rotieren kann. Die Abweichung bzw. Nullpunktverschiebung hat für unterschiedliche Reifentypen andere Werte.

Die Abweichung des Nullpunktes ist darauf zurückzuführen, dass bei der Messung der Unwucht nicht nur die eigentliche Unwucht des Fahrzeugreifens selbst gemessen wird, sondern dass der Messwert durch zusätzliche Fremdkräfte beeinflusst wird, die nicht von dem Fahrzeugreifen herrühren, sondern von der Unwuchtmessmaschine selbst. Diese Fremdkräfte sind hauptsächlich darauf zurückzuführen, dass die Drehkupplung selbst eine Unwucht besitzt und in fester Verbindung mit dem Luftschlauch und ggfs. mit elektrischen Leitungen steht und die Luftzuführung dadurch nicht frei ohne äußere Beeinflussung rotieren kann. Vielmehr hat die Drehkupplung ein Rundlaufproblem.

Um dem Rundlaufproblem der Drehkupplung entgegen zu treten bzw. um den Einfluss der zusätzlichen Fremdkräfte zu berücksichtigen, wird bei den bekannten Unwuchtmessmaschinen für jeden Fahrzeugreifentyp die Abweichung des Nullpunkts bzw. die Nullpunktverschiebung ermittelt und dokumentiert. Dies ist sehr aufwendig und dauert etwa 30 Minuten.

Nachteilig ist weiter, dass die Nullpunktverschiebung für jeden neuen Fahrzeugreifentyp separat durchgeführt werden muss. Außerdem erfordern bestimmte Veränderungen an der Unwuchtmessmaschine eine sofortige Neubestimmung aller Korrekturwerte (Nullpunktverschiebungen). Ein weiterer Nachteil ist darin zu sehen, dass die zeitaufwendige Ermittlung der Korrekturwerte die Verfügbarkeit der Unwuchtmessmaschine für die eigentliche Unwuchtmessung erheblich einschränkt. Wenn für einen Fahrzeugreifentyp die Nullpunktverschiebung ermittelt worden und bekannt ist, kann mit den bekannten Unwuchtmessmaschinen die Messung der Unwucht erfolgen. Von dem sich dabei ergebenden Messwert wird der dem betreffenden Fahrzeugreifentyp zugeordnete Korrekturwert (Nullpunktverschiebung) wieder abgezogen, und der entsprechend korrigierte Messwert entspricht in etwa den tatsächlichen Eigenschaften des Fahrzeugreifens und gibt die Unwucht wieder. Es ist ohne weiteres ersichtlich, dass die Bestimmung der Unwucht bei der bekannten Unwuchtmessmaschine bei dieser Vorgehensweise aufwendig und kostenintensiv ist. Der Patentanmeldung EP 1 746 400 A offenbart eine Unwuchtmessmaschine mit eine Luftzuführung. Der Erfindung liegt die Aufgabe zugrunde, eine Unwuchtmessmaschine zur Bestimmung der Unwucht von Fahrzeugreifen zu schaffen, bei der die voranstehend geschilderten aufwendigen Korrekturmaßnahmen (Ermittlung der Nullpunktverschiebung und anschließende Korrektur des Messwertes) nicht mehr erforderlich sind, und die uneingeschränkt für die Bestimmung der Unwucht zur Verfügung steht.

Die Lösung dieser Aufgabe durch die Merkmale des Patentanspruchs 1. Eine alternative erfindungsgemäße Lösung erfolgt durch die Merkmale des Anspruchs 5. Bei der Erfindung ist vorgesehen, dass der zur Drehkupplung führende Luftschlauch und die ggfs. zur Drehkupplung führenden elektrischen Leitungen, außer an der Drehkupplung selbst, auch an der hohlen Achse im Abstand von der Drehkupplung befestigt ist bzw. befestigt sind.

Die Erfindung geht davon aus, dass von der Krafteinleitung der Fremdkräfte in die Kraftaufnehmer nur die erste Harmonische der Schwingungen ein Problem ist, weil auch bei der Unwuchtmessung nur die erste Harmonische der Kraft der durch die Unwucht hervorgerufenen Schwingung ausgewertet wird. Insofern sind die Unwucht des Fahrzeugreifens und die von der Drehkupplung herrührende Krafteinleitung nicht zu unterscheiden.

Der zentrale Gedanke der Erfindung besteht darin, dass der Anteil der ersten Harmonischen der von der Drehkupplung verursachten Krafteinleitung eliminiert wird. Die Befestigung bzw. Abstützung des Luftschlauches (und ggfs. der elektrischen Leitungen) an der hohlen Achse bewirkt hinsichtlich der von der Drehkupplung stammenden Kraft praktisch einen "Kurzschluss". Die Kräfte, die durch das Rundlaufproblem der Drehkupplung entstehen, fließen nunmehr nicht durch die Kraftaufnehmer und sind somit auch nicht im ermittelten Messwert der Unwucht sichtbar, sodass die Unwucht fehlerfrei ermittelt werden kann.

Während bei den bekannten Unwuchtmessmaschinen die Unwucht dadurch ermittelt wird, indem die Nullpunktverschiebung vom gemessenen Messwert abgezogen wird, werden bei der Erfindung die störenden Fremdkräfte eliminiert, sodass sie im ermittelten Messwert nicht vorhanden sind. Eine Korrektur des ermittelten Messwertes ist daher nicht erforderlich.

Ein weiterer Vorteil der Erfindung besteht darin, dass dies für alle unterschiedlichen Reifentypen gilt. Daneben ist es auch von Vorteil, dass durch die Erfindung die uneingeschränkte Benutzung der Unwuchtmessmaschine ermöglicht wird, weil eine Bestimmung von Korrekturwerten (Nullpunktverschiebungen) nicht erforderlich ist. All dies wird überraschend durch die einfache erfindungsgemäße Maßnahme erreicht, den Luftschlauch und die elektrischen Leitungen am nicht rotierenden Teil der Spindel abzustützen, an welchem die Kraftaufnehmer montiert sind.

Eine zweckmäßige Ausgestaltung der Erfindung sieht vor, dass sich die hohle Achse innerhalb der hohlen Welle erstreckt, die sich außerhalb der hohlen Achse um diese dreht.

Im Vergleich zu bekannten Unwuchtmessmaschinen, bei denen sich die Welle innerhalb der hohlen Achse dreht, lässt sich die erfindungsgemäße Unwuchtmessmaschine einfach und kostengünstig herstellen.

Eine andere vorteilhafte Weiterbildung der Erfindung besteht darin, dass die hohle Achse an ihrem unteren Ende eine Platte aufweist, auf dessen Unterseite die Kraftaufnehmer zwischen der Platte und dem Maschinenbett montiert sind, und dass der Luftschlauch und ggfs. die elektrischen Leitungen mittels eines Halteelementes an einer Seite außen an der Platte befestigt sind.

Diese Maßnahme ermöglicht eine optimale Anordnung der Kraftaufnehmer sowie eine einfache Befestigung des Luftschlauches und ggfs. der elektrischen Leitungen an dem nicht rotierenden Teil der Achse.

Gemäß einer anderen zweckmäßigen Ausgestaltung der Erfindung ist die Platte rechteckförmig ausgebildet, und an den Eckpunkten der Platte sind vier Kraftaufnehmer symmetrisch zur hohlen Achse vorgesehen.

Die Lösung der erfindungsgemäßen Aufgabe erfolgt bei der im Oberbegriff des Patentanspruchs 6 beschriebenen Unwuchtmessmaschine auch die Merkmale des kennzeichnenden Teils des Patentanspruchs 6.

Dieser Lösung liegt der Gedanke zugrunde, eine Beeinflussung und Verfälschung des Messwertes für die Unwucht dadurch zu vermeiden, dass man das Auftreten von durch das Rundlaufproblem der Drehkupplung verursachten Fremdkräften von Anfang an verhindert, indem auf den Einsatz einer Drehkupplung verzichtet wird. Die Befüllung des Fahrzeugreifens erfolgt vor der Messung der Unwucht und bevor die Welle und der Fahrzeugreifen in Rotation versetzt werden. Die Luftzuführung und die Welle können anschließend während des Messvorganges ohne Einfluss von äußeren Fremdkräften rotieren, wobei sichergestellt wird, dass die zuvor zugeführte Luft im Fahrzeugreifen verbleibt. Der dann ermittelte Messwert ist daher ausschließlich auf von der Unwucht herrührenden Kräfte zurückzuführen und stellt die Unwucht fehlerfrei dar.

In vorteilhafter Weiterbildung der Erfindung ist vorgesehen, dass in der Luftzuführung ein Rückschlagventil angeordnet ist, welches verhindert, dass nach dem Entfernen des Luftschlauches von der Drehkupplung Luft aus dem Fahrzeugreifen entweicht.

Durch diese Maßnahme ist sichergestellt, dass während der Messung der Unwucht die Luft in dem Fahrzeugreifen verbleibt, obwohl der Luftschlauch von der Drehkupplung entfernt worden ist.

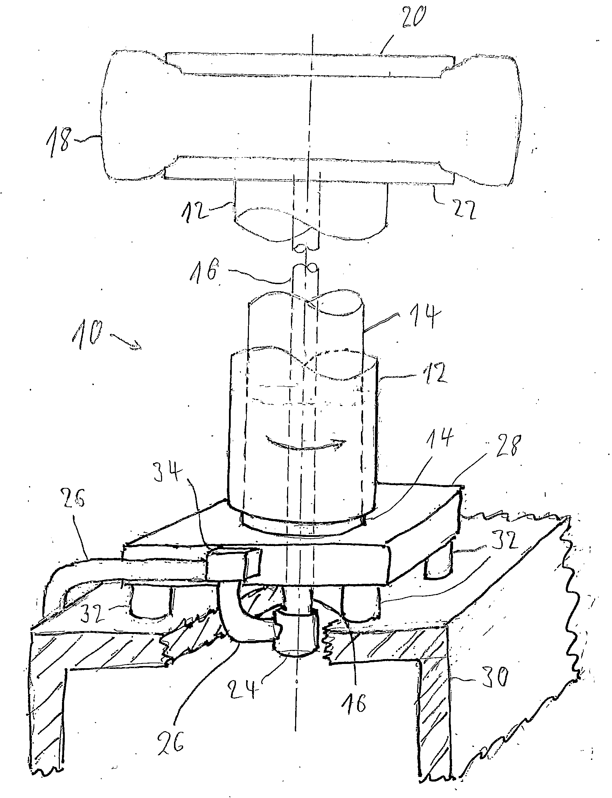

Nachfolgend wird die Erfindung anhand der Zeichnung näher erläutert, in der ein Ausführungsbeispiel der Erfindung in teilweiser und schematischer Querschnittsansicht dargestellt ist.

Die Unwuchtmessmaschine 10 umfasst eine hohle Achse 14, in der sich eine drehbare hohle Welle 12 befindet, die von einem nicht dargestellten Antrieb in Rotation versetzt werden kann. Am oberen Ende der hohlen Welle 12 wird in bekannter Weise ein Reifen 18, dessen Unwucht gemessen werden soll, mit Hilfe von zwei Felgenplatten 20 und 22 auf der Welle 12 aufgespannt.

Für das Befüllen des Fahrzeugreifens 18 ist eine zentrische Luftzuführung 16 vorgesehen, die fest mit der Welle 12 verbunden ist und sich mit dieser dreht. Am unteren Ende der Luftzuführung 16 ist eine Drehkupplung 24 angeordnet, an welcher das eine Ende eines Luftschlauches 26 angeschlossen ist, und dessen anderes Ende mit einem nicht dargestellten Drucklufterzeuger verbunden ist. Die Drehkupplung 24 ermöglicht es, die Luftzufuhr auch bei sich drehender Welle 12 und sich damit drehender Luftzuführung 16 aufrecht zu erhalten und den Luftdruck im Fahrzeugreifen 18 konstant zu halten.

Die hohle Achse 14 mündet an ihrem unteren Ende in eine rechteckförmige Platte 28, die Bestandteil der hohlen Achse 14 ist. Unterhalb der Platte 28 befindet sich ein Maschinenbett 30 der Unwuchtmaschine 10, und zwischen der Platte 28 parallel zu dieser verlaufenden Oberfläche des Maschinenbettes 30 sind vier Kraftaufnehmer 32 an den Eckpunkten der Platte 28 angeordnet. Mit diesen Kraftaufnehmern 32 werden die zwischen der Platte 28 und dem Maschinenbett 30 bei rotierender Welle 12 und rotierendem Fahrzeugreifen 18 auftretenden Kräfte in an sich bekannter Weise gemessen.

Bei den Felgenplatten 20, 22 handelt es sich um präzise Bauteile, die vor ihrer Verwendung genau ausgewuchtet werden, sodass sie nur eine minimale gerade noch zulässige eigene Unwucht oder im Idealfall überhaupt keine Unwucht besitzen. Dies ist wichtig, weil für eine möglichst fehlerfreie Messung der Unwucht des Fahrzeugreifens 18 von den Kraftaufnehmern 32 möglichst nur solche Kräfte gemessen werden sollen, die von der Unwucht des Fahrzeugreifens 18 selbst erzeugt werden. Zusätzliche Kräfte, die von einer Unwucht der Felgenplatte 20, 22 herrühren, würden das Messergebnis verfälschen.

Gemäß der Erfindung ist der zur Drehkupplung 24 führende Luftschlauch 26 nicht nur an der Drehkupplung 24 selbst, sondern zusätzlich im Abstand von der Drehkupplung 24 an der Platte 28 befestigt. Zu diesem Zweck ist an der einen Seite der hohlen Platte 28 ein Halteelement 34 vorgesehen, mit welchem der Luftschlauch sich an der Platte 28 abstützen kann. Durch diese Maßnahme wird der Anteil der ersten Harmonischen der von der Drehkupplung 24 bei rotierender Welle 12 und rotierendem Fahrzeugreifen 18 verursachten Krafteinleitung in die Kraftaufnehmer eliminiert. Die Kräfte, die durch das Rundlaufproblem der Drehkupplung 24 entstehen, fließen somit nicht durch die Kraftaufnehmer und sind daher auch nicht im ermittelten Messwert der Unwucht sichtbar, die nunmehr fehlerfrei ohne äußere Beeinflussung ermittelt werden kann.

Gemäß einem anderen in der Zeichnung nicht näher dargestelltem Lösungsvorschlag der Erfindung lässt sich die Unwucht auch dadurch fehlerfrei und ohne äußere Krafteinwirkung messen, dass auf die Verwendung einer Drehkupplung 24 verzichtet wird, und dass der Fahrzeugreifen 18 im ruhenden, nicht rotierenden Zustand der Welle 12 und des Fahrzeugreifens 18 über die Luftzuführung 16 befüllt wird, und dass der Luftschlauch 26 nach der Befüllung des Fahrzeugreifens 18 von der Luftzuführung 16 getrennt wird, wobei die dem Fahrzeugreifen 18 zugeführte Luft jedoch im Fahrzeugreifen 18 verbleibt. Anschließend wird dann die Welle 12 angetrieben und in Rotation versetzt, wodurch dann auch die Luftzuführung 16 und der Fahrzeugreifen 18 rotieren.

Wenn der Luftschlauch 18 von der Luftzuführung 16 getrennt wird, bevor die Welle 12 in Rotation versetzt wird, und wenn damit die Luftzuführung zum Fahrzeugreifen 18 vollständig unterbunden ist, kann sich die Welle 12 mit der Luftzuführung 18 ohne Einfluss von Fremdkräften drehen, weil keine Drehkupplung 24 vorhanden ist. Die von den Kraftaufnehmern 32 gemessenen Kräfte sind dann nur noch auf die Unwucht des Fahrzeugreifens 18 zurückzuführen.

Um sicherzustellen, dass keine Luft aus dem Fahrzeugreifen 18 entweicht, wenn der Luftschlauch 26 von der Luftzuführung 16 entfernt worden ist, wird innerhalb der Luftzuführung 16 ein hier nicht dargestelltes Rückschlagventil angeordnet.

### Bezugszeichenliste

### (ist Teil der Beschreibung)

- 10: Unwuchtmessmaschine
- 12: Hohle Welle
- 14: Hohle Achse
- 16: Luftzuführung
- 18: Fahrzeugreifen
- 20: Felgenplatte
- 22: Felgenplatte
- 24: Drehkupplung
- 26: Luftschlauch
- 28: Platte
- 30: Maschinenbett
- 32: Kraftaufnehmer
- 34: Halteelement

## Patentansprüche

1. Unwuchtmessmaschine (10) zur Bestimmung der Unwucht von Fahrzeugreifen (18), mit einer durch einen Antrieb in eine Rotation bringbaren hohlen Welle (12), die den rotierenden Teil einer Spindel bildet, die sich relativ zu einer hohlen Achse (14) dreht, welche den nicht rotierenden Teil der Spindel darstellt, sowie mit einer für das Befüllen des Fahrzeugreifens (18) mit Luft vorgesehenen rohrförmigen Luftzuführung (16), die zentriert innerhalb der Spindel angeordnet und mit der Welle (12) verbunden ist und sich zusammen mit der Welle (12) dreht, wobei der Fahrzeugreifen (18) zur Bestimmung der Unwucht von der Welle (12) angetrieben und in Rotation versetzt wird, wobei an dem vom Fahrzeugreifen (18) abgewandten Ende der Luftzuführung (16) eine Drehkupplung (24) angeordnet ist, an die ein Luftschlauch (26) und ggfs. auch elektrische Leitungen angeschlossen und befestigt ist bzw. angeschlossen und befestigt sind, und wobei zwischen der hohlen Achse (14) und dem Maschinenbett (30) der Unwuchtmessmaschine (10) Kraftaufnehmer (32) zur Messung der im Betrieb der Unwuchtmessmaschine (10) zwischen der hohlen Achse (14) und dem Maschinenbett (30) auftretenden Kräfte vorgesehen sind, wobei der zur Drehkupplung (24) führende Luftschlauch (26) und ggfs. die zur Drehkupplung (24) führenden elektrischen Leitungen außer an der Drehkupplung (24) auch an der hohlen Achse (14) im Abstand von der Drehkupplung (24) befestigt ist bzw. befestigt sind.

2. Unwuchtmessmaschine nach Anspruch 1, **dadurch gekennzeichnet, dass** sich die hohle Achse (14) innerhalb der hohlen Welle (12) erstreckt, die sich außerhalb der hohlen Achse (14) um diese dreht.

3. Unwuchtmessmaschine nach Anspruch 1 und/oder 2, **dadurch gekennzeichnet, dass** die hohle Achse (14) an ihrem unteren Ende eine Platte (28) aufweist, auf deren Unterseite die Kraftaufnehmer (32) zwischen der hohlen Achse (14) und dem Maschinenbett (30) montiert sind, und dass der Luftschlauch (26) und ggfs. die elektrischen Leitungen mittels eines Halteelementes (34) seitlich an der Platte (28) befestigt sind.

4. Unwuchtmessmaschine nach Anspruch 3, **dadurch gekennzeichnet, dass** die Platte (28) rechteckförmig ausgebildet ist, und dass vier Kraftaufnehmer (32) an den Eckpunkten der Platte (28) symmetrisch zur hohlen Achse (14) vorgesehen sind.

5. Unwuchtmessmaschine zur Bestimmung der Unwucht von Fahrzeugreifen (18), mit einem durch einen Antrieb in eine Rotation bringbaren hohlen Welle (12), die den rotierenden Teil einer Spindel bildet, die sich relativ zu einer hohlen Achse (14) dreht, welche den nicht rotierenden Teil der Spindel darstellt, sowie mit einer für das Befüllen des Fahrzeugreifens (18) mit Luft vorgesehenen rohrförmigen Luftzuführung (16), die zentriert innerhalb der Spindel angeordnet und mit der Welle (12) verbunden ist und sich zusammen mit der Welle (12) dreht, wobei der Fahrzeugreifen (18) zur Bestimmung der Unwucht von der Welle (12) angetrieben und in Rotation versetzt wird, wobei die Luftzuführung (16) mit einem Luftschlauch (26) verbindbar ist und wobei zwischen der hohlen Achse (14) und dem Maschinenbett (30) der Unwuchtmessmaschine (10) Kraftaufnehmer (32) zur Messung der im Betrieb der Unwuchtmessmaschine (10) zwischen der hohlen Achse (14) und dem Maschinenbett (30) auftretenden Kräfte vorgesehen sind, wobei der Fahrzeugreifen (18) im ruhenden, nicht rotierenden Zustand der Welle (12) und des Fahrzeugreifens (18) über den Luftschlauch (26) und über die nicht rotierende Luftzuführung (16) befüllbar ist, und dass der Luftschlauch (26) nach der Befüllung des Fahrzeugreifens (18) von der Luftzuführung (16) trennbar ist, wobei die zugeführte Luft jedoch im Fahrzeugreifen (18) verbleibt.

6. Unwuchtmessmaschine nach Anspruch 5, **dadurch gekennzeichnet, dass** in der Luftzuführung (16) ein Rückschlagventil vorgesehen ist, welches verhindert, dass nach dem Entfernen des Luftschlauches (26) von der Luftzuführung (16) Luft aus dem Fahrzeugreifen (18) entweicht.

## Claims

1. Imbalance measuring machine (10) for determining the imbalance of vehicle tyres (18), comprising a hollow shaft (12), which can be made to rotate by a drive and forms the rotating part of a spindle that rotates in relation to a hollow axle (14), which represents the non-rotating part of the spindle, and also comprising a tubular air feed (16), which is provided for inflating the vehicle tyre (18) with air, is arranged centred within the spindle and is connected to the shaft (12) and rotates together with the shaft (12), wherein, for determining the imbalance, the vehicle tyre (18) is driven and made to rotate by the shaft (12), wherein at the end of the air feed (16) that is facing away from the vehicle tyre (18) there is arranged a rotary coupling (24), to which an air tube (26) is connected and fastened, and optionally also electrical lines are connected and fastened, and wherein force transducers (32) are provided between the hollow axle (14) and the machine bed (30) of the imbalance measuring machine (10) for measuring the forces occurring between the hollow axle (14) and the machine bed (30) during the operation of the imbalance measuring machine (10), wherein the air tube (26) leading to the rotary coupling (24) is fastened, and optionally the electrical lines leading to the rotary coupling (24) are fastened, not only on the rotary coupling (24) but also on the hollow axle (14) at a distance from the rotary coupling (24).

2. Imbalance measuring machine according to Claim 1, **characterized in that** the hollow axle (14) extends within the hollow shaft (12), which rotates outside the hollow axle (14) about the latter.

3. Imbalance measuring machine according to Claim 1 and/or 2, **characterized in that** the hollow axle (14) has at its lower end a plate (28), on the underside of which the force transducers (32) are mounted between the hollow axle (14) and the machine bed (30), and **in that** the air tube (26) and optionally the electrical lines are fastened laterally on the plate (28) by means of a holding element (34).

4. Imbalance measuring machine according to Claim 3, **characterized in that** the plate (28) is rectangularly formed, and **in that** four force transducers (32) are provided at the corner points of the plate (28), symmetrically in relation to the hollow axle (14).

5. Imbalance measuring machine for determining the imbalance of vehicle tyres (18), comprising a hollow shaft (12), which can be made to rotate by a drive and forms the rotating part of a spindle that rotates in relation to a hollow axle (14), which represents the non-rotating part of the spindle, and also comprising a tubular air feed (16), which is provided for inflating the vehicle tyre (18) with air, is arranged centred within the spindle and is connected to the shaft (12) and rotates together with the shaft (12), wherein, for determining the imbalance, the vehicle tyre (18) is driven and made to rotate by the shaft (12), wherein the air feed (16) can be connected to an air tube (26) and wherein force transducers (32) are provided between the hollow axle (14) and the machine bed (30) of the imbalance measuring machine (10) for measuring the forces occurring between the hollow axle (14) and the machine bed (30) during the operation of the imbalance measuring machine (10), wherein, in the at-rest, non-rotating state of the shaft (12) and of the vehicle tyre (18), the vehicle tyre (18) can be inflated by way of the air tube (26) and by way of the non-rotating air feed (16), and in that, after the inflation of the vehicle tyre (18), the air tube (26) can be disconnected from the air feed (16), the air that has been fed in remaining however in the vehicle tyre (18).

6. Imbalance measuring machine according to Claim 5, **characterized in that** in the air feed (16) there is provided a non-return valve, which prevents air from escaping out of the vehicle tyre (18) after the removal of the air tube (26) from the air feed (16).

## Revendications

1. Machine de mesure de déséquilibre (10) pour déterminer le déséquilibre de pneus de véhicules (18), comprenant un arbre creux (12) pouvant être mis en rotation par un entraînement, lequel forme la partie rotative d'une broche qui tourne par rapport à un axe creux (14) qui constitue la partie non rotative de la broche, et comprenant une alimentation en air (16) de forme tubulaire prévue pour remplir le pneu de véhicule (18) avec de l'air, laquelle est disposée de manière centrée à l'intérieur de la broche et est connectée à l'arbre (12) et tourne conjointement avec l'arbre (12), le pneu de véhicule (18) étant entraîné et mis en rotation par l'arbre (12) pour déterminer le déséquilibre, à l'extrémité de l'alimentation en air (16) opposée au pneu de véhicule (18) étant disposé un accouplement rotatif (24) au niveau duquel est raccordé et fixé un tuyau d'air (26) et éventuellement aussi des conduites électriques, et entre l'axe creux (14) et le bâti de la machine (30) de la machine de mesure de déséquilibre (10) étant prévus des capteurs de forces (32) pour mesurer les forces se produisant pendant le fonctionnement de la machine de mesure de déséquilibre (10) entre l'axe creux (14) et le bâti de la machine (30), le tuyau d'air (26) conduisant à l'accouplement rotatif (24) et éventuellement les conduites électriques conduisant à l'accouplement rotatif (24) étant fixé(s) à l'accouplement rotatif (24) et également à l'axe creux (14) à distance de l'accouplement rotatif (24).

2. Machine de mesure de déséquilibre selon la revendication 1, **caractérisée en ce que** l'axe creux (14) s'étend à l'intérieur de l'arbre creux (12) qui tourne à l'extérieur de l'axe creux (14) autour de celui-ci.

3. Machine de mesure de déséquilibre selon la revendication 1 et/ou la revendication 2, **caractérisée en ce que** l'axe creux (14) présente au niveau de son extrémité inférieure une plaque (28) sur le côté inférieur de laquelle sont montés les capteurs de forces (32) entre l'axe creux (14) et le bâti de la machine (30) et **en ce que** le tuyau d'air (26) et éventuellement les conduites électriques sont fixés au moyen d'un élément de retenue (34) latéralement sur la plaque (28).

4. Machine de mesure de déséquilibre selon la revendication 3, **caractérisée en ce que** la plaque (28) est réalisée sous forme rectangulaire et **en ce que** quatre capteurs de forces (32) sont prévus au niveau des coins de la plaque (28) symétriquement par rapport à l'axe creux (14).

5. Machine de mesure de déséquilibre pour déterminer le déséquilibre de pneus de véhicule (18), comprenant un arbre creux (12) pouvant être mis en rotation par un entraînement, lequel forme la partie rotative d'une broche qui tourne par rapport à un axe creux (14) qui constitue la partie non rotative de la broche, et comprenant une alimentation en air de forme tubulaire (16) prévue pour remplir le pneu de véhicule (18) avec de l'air, laquelle est disposée de manière centrée à l'intérieur de la broche et est connectée à l'arbre (12) et tourne conjointement avec l'arbre (12), le pneu de véhicule (18) étant entraîné et mis en rotation par l'arbre (12) pour déterminer le déséquilibre, l'alimentation en air (16) pouvant être connectée à un tuyau d'air (26) et entre l'axe creux (14) et le bâti de machine (30) de la machine de mesure de déséquilibre (10) étant prévus des capteurs de forces (32) pour mesurer les forces se produisant pendant le fonctionnement de la machine de mesure de déséquilibre (10) entre l'axe creux (14) et le bâti de la machine (30), le pneu de véhicule (18), à l'état de repos non rotatif de l'arbre (12) et du pneu de véhicule (18), pouvant être rempli par le biais du tuyau d'air (26) et par le biais de l'alimentation en air non rotative (16), et en ce que le tuyau d'air (26), après le remplissage du pneu de véhicule (18), peut être séparé de l'alimentation en air (16), l'air acheminé restant toutefois à l'intérieur du pneu de véhicule (18).

6. Machine de mesure de déséquilibre selon la revendication 5, **caractérisée en ce qu'**un clapet antiretour est prévu dans l'alimentation en air (16), lequel fait en sorte, après l'enlèvement du tuyau d'air (26) de l'alimentation en air (16), que de l'air ne s'échappe pas du pneu de véhicule (18) .
